(19) Europäisches Patentamt

European Patent Office

Office européen des brevets

(11) **EP 0 795 839 B1**

(12) **EUROPEAN PATENT SPECIFICATION**

(45) Date of publication and mention
of the grant of the patent:
**01.06.2005   Bulletin 2005/22**

(51) Int Cl.$^7$: **G06K 15/10**, G06K 15/16

(21) Application number: **97104163.7**

(22) Date of filing: **12.03.1997**

(54) **Printer and method of controlling it**

Drucker und Steuerungsverfahren dafür

Imprimante et méthode de contrôle

(84) Designated Contracting States:
**DE FR GB IT**

(30) Priority: **12.03.1996   JP 5521396**

(43) Date of publication of application:
**17.09.1997   Bulletin 1997/38**

(73) Proprietor: **Seiko Epson Corporation**
**Shinjuku-ku, Tokyo 163 (JP)**

(72) Inventor: **Miyasaka, Tomomi**
**Suwa-shi, Nagano-ken (JP)**

(74) Representative: **Hoffmann, Eckart, Dipl.-Ing.**
**Patentanwalt,**
**Bahnhofstrasse 103**
**82166 Gräfelfing (DE)**

(56) References cited:
**EP-A- 0 227 609**

• **PATENT ABSTRACTS OF JAPAN vol. 012, no.**
**027 (M-662), 27 January 1988 & JP 62 181169 A**
**(FUJITSU LTD), 8 August 1987,**

**EP 0 795 839 B1**

**Description**

The invention relates to a printer, such as a serial printer or a line printer, which performs printing on paper (or another type of printing medium) while moving the position of a print head relative to the paper. The invention also relates to a method of controlling such printer.

For achieving the necessary relative movement between the print head and the paper (in one or more directions depending on the type of printer) mechanical transport mechanisms are employed using motors, gear trains etc.. Due to the nature of commonly used transport mechanisms there is no continuous but a stepwise relative motion. A single step is the minimum amount of relative motion that is available. This minimum amount, i.e., the minimum step size of the relative motion, will be referred to as MinSS hereinafter. The respective MinSSs typically differ in different printer models. More particularly, the minimum step sizes of the relative motion in the horizontal and vertical directions determine the resolution of the printer. With the increasing demand for higher resolution printers efforts have been made and are still being made to develop higher resolution printers whose MinSSs are correspondingly reduced.

For controlling the line spacing, character spacing etc. in a printed document or graphic, application software commonly uses standardized control commands that cause the printer to perform a relative motion in a certain direction by an amount equal to the MinSS multiplied by a factor included as a parameter $n$ in the control command. For the sake of convenience this type of command will be referred to as a "motion command" hereinafter (note that execution of such a motion command may by itself result in a relative motion between the print head and the paper or only set an amount of motion which is executed in response to another command). Where the same motion command with the same parameter value is sent to different printer models the amount of the resulting relative motion will be different in each printer model if their MinSSs are different. Thus, because the MinSS can vary in different printer models, application software that can be used with printers of different specifications must be adapted to the respective printer specifications. For example, to assure that the line spacing is the same on each printer that can be used with a certain application software, the value of the parameter $n$ of a corresponding motion command must be separately defined for each printer. Bearing the trend towards higher resolution printers, i.e. smaller MinSSs, in mind, this means in particular, that software developed for lower resolution printers must be adapted in order to be applicable to higher resolution printers.

Current trends in the development of systems that are capable of using a printer are towards shortening the development time, lowering development expenses and reducing the number of personnel needed for development so as to reduce overall development costs. The need to adapt application software for each application, and specifically for the model of printer to be used, is therefore a significant disadvantage.

JP-A-62 181 169 discloses a printer according to the pre-characterizing portion of claim 1. The document is silent about how the printer obtains the modified step size.

In consideration of the aforementioned problem, the object of the present invention is to provide a printer and a method of controlling it, which allow to eliminate or at least minimize the need to adapt application software to individual printer specifications.

This object is achieved with a printer as claimed in claim 1 and a method as claimed in claim 4, respectively. Preferred embodiments of the invention are subject-matter of the dependent claims.

A printer embodying the present invention includes means allowing for the setting of a modified step size for the relative motion. This modified step size will be referred to as ModSS hereinafter. The relative motion is then performed on the basis of the ModSS rather than the MinSS.

The means for receiving and storing a modified step size (command receiving means and storing means) can be, for example, a microprocessor for interpreting commands received from a host device to set the modified step size and DIP switches that are manually set by the operator.

The motion amount setting means can also be, for example, a microprocessor for setting the amount of relative motion by interpreting commands received from a host device specifying a desired amount of relative motion.

With the configuration of the invention the minimum step sizes of the relative motion between the print head and the paper that can differ among different printer models are converted by the control program. One advantage of the invention is that it allows existing application software designed for printers of a particular resolution to be used with printers of a higher resolution without requiring any change to the application software. Furthermore, users developing application software that can be used with plural different printer models can provide the greatest compatibility with the least number of changes to the application software. Newly developed application software can be designed so as to be compatible with existing and future printer specifications. In conventional printers, setting the paper feed amount or line spacing and specifying the print position has been accomplished by using commands related to the minimum step size specific to the printer mechanism. With the present invention, however, dependence on the printer mechanism is minimized, and setting the paper feed amount, for example, using commands can be accomplished as absolute values in units of inches or other standard units of measure.

The invention will be described in more detail below with reference to the drawings, in which:

2

FIG. 1      is a simplified overview of a printer mechanism,

FIG. 2      is a block diagram of the printer mechanism and its control circuit,

FIG. 3a      is a flow chart illustrating the setting of a modified step size in accordance with the invention, and

FIG. 3b      is a flow chart illustrating the setting of an amount of relative motion based on a modified step size in accordance with the invention.

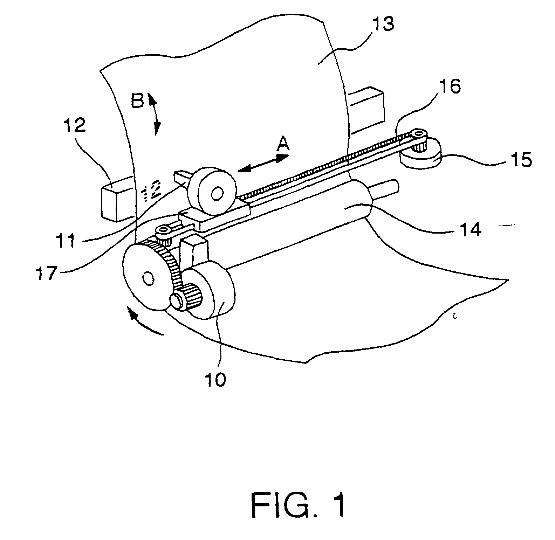

The invention will be explained with reference to a serial printer whose printer mechanism is schematically illustrated in Fig. 1. As is well-known, in a serial printer a line is printed by successively moving the print head 11 in a first direction A (the horizontal direction in Fig. 1) relative to the paper 13. After one line has been completed the paper 13 is moved in a second direction B (the vertical direction in Fig. 1) relative to the print head which may then start printing the next line. As will be explained in more detail below, a print head transport mechanism and a paper feed mechanism are provided to cause these relative motions. Each transport mechanism has its MinSS. The two MinSSs may or may not be the same.

Referring to FIG. 1, print head 11 is mounted on a carriage 17. The carriage 17 is capable of performing a reciprocating motion across the width of paper 13 and is driven by stepping motor 15 via belt 16. Print head 11 is driven synchronized to the carriage movement to print characters, graphics etc. on paper 13.

Paper 13 is guided between print head 11 and platen 12 which is normally made from a hard material. Print head 11 prints on paper 13 backed by platen 12. When printing of a particular line is completed, stepping motor 10 is driven to rotate feed roller 14, thereby transporting paper 13 by the amount corresponding to the desired line spacing in the direction of arrow B.

In the example shown in Fig. 1, step motor 15 and belt 16 which engages a pinion of motor 15 are the main components of the print head transport mechanism and determine the horizontal minimum step size, $MinSS_h$, i.e. the minimum step size of the print head's motion. Step motor 10, feed roller 14 and the gears connecting them are the main components of the paper feed mechanism which determine the vertical minimum step size, $MinSS_v$, i.e. the minimum step size of the paper feed.

It is to be noted that Fig. 1 illustrates only one example of a printer mechanism to which the present invention may be applied. The particular structure of the printer mechanism is not critical to the invention. For instance, there are printers which use the same motor as drive source for both the print head transport mechanism and the paper feed mechanism. Line printers, on the other hand, use print heads capable of printing one line at a time and, therefore, do not normally employ a print head transport mechanism at all.

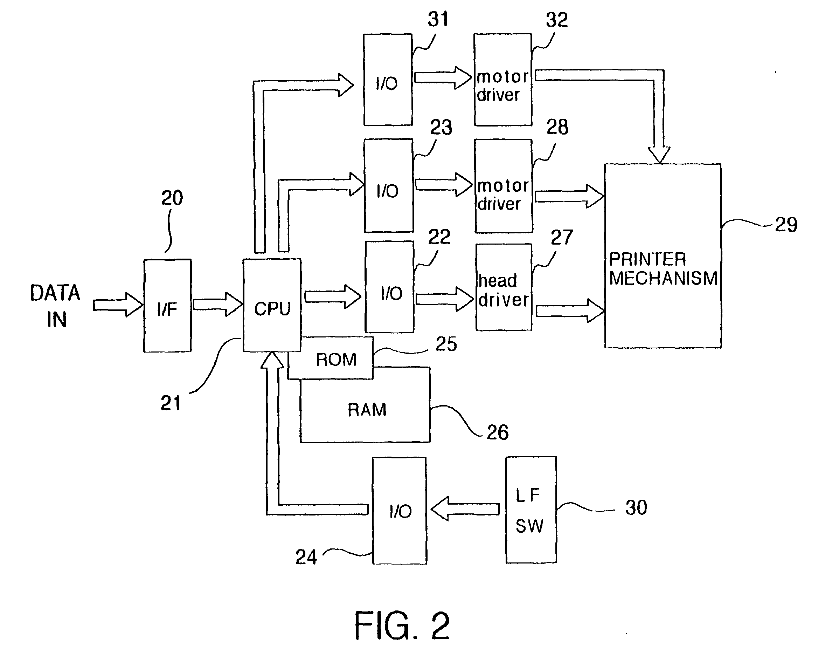

FIG. 2 is a block diagram of a printer to which the present invention may be applied. In Fig. 2, 29 denotes the printer mechanism of the printer, which may be that of Fig. 1. The remaining components in Fig. 2 represent the printer's control circuit. Data from a host device to which the printer is connected or into which it is integrated, are input to interface 20 from which they are passed to CPU 21. The data which include control commands and print data are processed by CPU 21 which controls the printing mechanism 29 in accordance with the data via I/O ports 22, 23 and 31 and drivers 27, 28 and 32. Motor driver 28 is for driving the carriage drive motor (15 in the example of Fig. 2) and motor driver 32 is for driving the paper feed motor (10 in the example of Fig. 2) inside printer mechanism 29. Head driver 27 is for driving the print head. I/O port 24 is provided for passing a line feed signal from a line feed switch 30 to CPU 21.

CPU 21 is also connected to ROM 25 and RAM 26. RAM 26 comprises both an input buffer to which print data are directly buffered, and a print buffer for storing dot data which are required to drive the print head. CPU 21 controls overall printer operation by implementing a program stored in ROM 25. In addition to the program, ROM 25 also stores a character generator which is used for converting character codes among the print data to corresponding dot data. CPU 21 detects control codes in the data received from interface 20, interprets the commands and controls printer operation according to those commands.

It is assumed in the following description that all printers embodying the invention are controlled using the same control command set, commands of this command set being input through interface 20 from an external host computer. This makes it possible to use the same device driver or application software to drive different printers.

Before explaining the control according to the present invention, the problem involved in the printer specific MinSSs will be illustrated in more detail with reference to an example. Relative motion between the print head and the paper in the horizontal or vertical direction is often controlled by motion commands formed of control codes to identify the command and a parameter value expressing the desired amount of motion in units of the respective MinSS. One example of such motion command is the line spacing command *ESC 3 n* in which *ESC 3* are the control codes while *n* is the parameter value. The line spacing command is used with prior art printers to set the line spacing to the value of n x $MinSS_v$. Once this motion command has been received and processed by the printer each following line feed command (LF) or operation of line feed switch 30 will advance the paper by an amount equal to n x $MinSS_v$. Let us assume now $MinSS_v$ of a printer A is 1/144 inch and $MinSS_v$ of a printer B is 1/240 inch. Let us further assume printers A and B both receive the same line spacing command *ESC 3 48* . A subsequently received LF-command results in printer A in a paper feed amount of 48 x (1/144) = 1/3 inch and in printer B in a paper feed amount of 48 x (1/240) = 1/5 inch. Thus, the absolute value of the line spacing will be different in the two printers. While this example exemplifies the problem with respect to the paper feed, i.e., the vertical relative motion, it will be understood that the same problem exists with respect to the print head positioning, i.e., the horizontal relative motion.

A printer according to the present invention is structured and controlled to allow setting of one or more modified step sizes, ModSSs, and to use this or these ModSSs instead of the MinSSs. By this, printers with different MinSSs are enabled to provide the same absolute amount of relative motion in response to the same motion command from the application software.

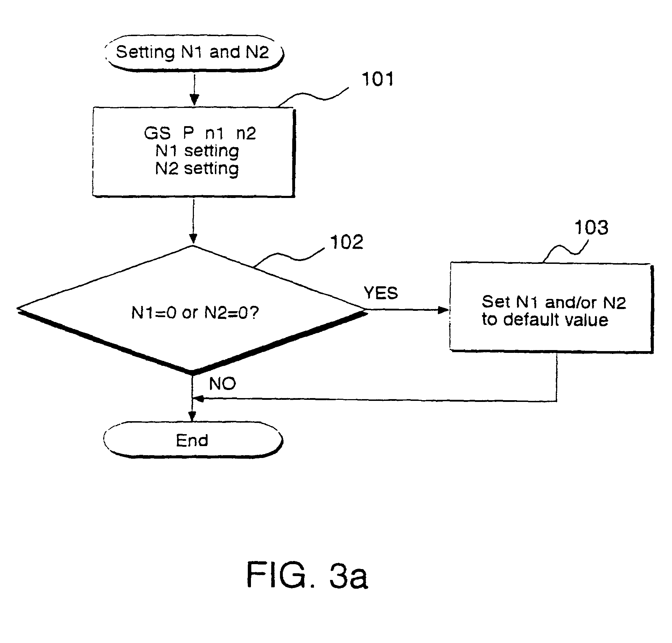

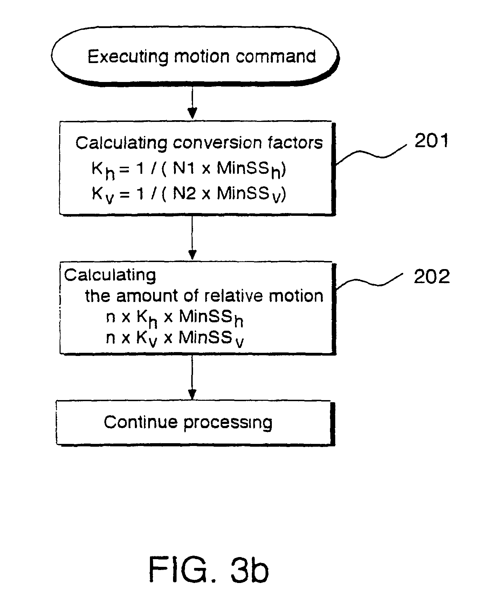

A flow chart of the printer control method of the invention implemented as part of the program stored in ROM 25 is shown in FIG. 3. Fig. 3a shows the process for setting an ModSS and Fig. 3b shows the process of executing a motion command.

The ModSS is a virtual minimum step size that can be set through a corresponding control command by the software. The command for setting the ModSS is defined as *GS P n1 n2* where *GS* and *P* are control codes and *n1* and *n2* are variables, i.e. the command parameters. As mentioned before, a printer mechanism having a print head transport mechanism and a paper feed mechanism like the example illustrated in Fig. 1, has two minimum step sizes, $MinSS_h$ and $MinSS_v$, one for each of the transport mechanisms. Accordingly, two ModSSs, $ModSS_h$ and $ModSS_v$, may be set by means of the parameters *n1* and *n2,* respectively. n1 and n2 are chosen according to the printer specifications.

Whenever CPU 20 recognizes a control command as being an ModSS setting command it executes the ModSS setting routine illustrated in Fig. 3a. In step 101 the command parameters n1 and n2 are stored in memory as variables N1 and N2. These variables N1 and N2 are preferably initialized by the printer to values corresponding to $MinSS_h$ and $MinSS_v$, respectively, of the printer. For example, if $MinSS_h$ of the printer is 1/150 inch and $MinSS_v$ of the printer is 1/144 inch, then N1 = 150 and N2 = 144 are the default values. The next step 102 then determines if N1 = 0 and/or N2 = 0. If so, since these settings are invalid (not possible), N1 and/or N2 are reset to their default values (step 103). The routine ends with each of N1 and N2 having either the default value or a non-zero modified value equal to the corresponding command parameter n1 or n2.

Incidentally, in addition to the ModSS setting command or as an alternative the printer may be provided with setting means allowing to set ModSSs (actually the variables N1, N2) via the printer control console, a DIP switch etc.. More particularly, in case of a DIP switch the printer may be designed to initialize N1 and N2 to modified step sizes as set by the DIP switch. In this case there is no need for the application software to send the ModSS setting command.

If the variables N1 and N2 are set to their default values, the printer mechanism is controlled to operate with the minimum horizontal step size $MinSS_h$ and the minimum vertical step size $MinSS_v$ (of 1/150 inch and 1/144 inch, respectively, in the example). On the other hand, if N2 is set to 240, for example, and N1 remains at the default setting, the printer mechanism is controlled to operate with the minimum horizontal step size $MinSS_h$ of 1/150 inch and a modified vertical step size $ModSS_v$ of 1/240 inch.

Once CPU 21 has executed the ModSS setting routine (during printer initialization caused by software from the host device, for example) or ModSSs have been directly set in the printer, the unit of vertical relative motion (e.g. unit of paper feed) and the unit of horizontal relative motion (e.g. unit of character spacing) can thereafter be considered as being absolute units expressed in e.g. inch when executing control commands related to the step size, and it is not necessary to consider the specific MinSSs of the printer mechanism.

Whenever CPU 21 recognizes a control command as being a motion command, it executes a particular motion command routine as illustrated in Fig. 3b and described below. As defined above, a motion command consists of command codes and a parameter, the parameter representing an amount of motion in terms of a number times which to perform a relative motion corresponding to the minimum step size. The line spacing command *ESC 3 n* will be used as an example of a motion command.

In step 201 conversion factors are calculated as follows

for horizontal motion:

$$K_h = 1/(N1 \times MinSS_h) \tag{1a}$$

for vertical motion:

$$K_v = 1/(N2 \times MinSS_v) \tag{2a}$$

In step 202 these conversion factors are used to calculate the amount of relative motion as

$$n \times K_h \times MinSS_h \tag{1b}$$

and

$$n \times K_v \times MinSS_{V'} \tag{2b}$$

respectively. The rest of the routine is conventional and well-known to those of ordinary skill in the art.

Thus, while conventional printers respond to a motion command by setting or executing an amount of relative motion equal to the respective MinSS times the command parameter value $n$, according to the present invention the product resulting in conventional printers is further multiplied by the respective conversion factor which is equivalent to multiplying the command parameter value with the ModSS rather than the MinSS. It is to be noted that as long as no ModSS has been set, i.e. N1 and N2 are at their default values, the conversion factors resulting from equations (1 a) and (2a) will be $K_h = 1$ and $K_v = 1$ and the printer behaves like a conventional printer.

The effect achieved by the invention will be illustrated below using as an example two printers A and B differing in their $MinSS_v$. For simplicity, the following explanation is limited to the description of the paper feed, i.e., the relative motion in the vertical direction. The $MinSS_v$ (the amount of paper feed resulting from one step of stepping motor 10 in this example) is known for both printers A and B. More particularly, it is assumed that printer A has an $MinSS_v$ of 1/144 inch, and printer B has an $MinSS_v$ of 1/240 inch. Using the same line spacing command "*ESC 3 n*", it is possible to set the line spacing of each printer to be the same.

It is assumed that both printers received the ModSS setting command "*GS P n 1 n2*" with n 1 = 0 and n2 = 720. Since n1 is zero N1 is reset to the default value. On the other hand, N2 is set to 720. It is further assumed that after $ModSS_v$ has been set a line spacing command *ESC 3 n* with $n$ = 144 is received.

In accordance with equation (2a) each printer calculates its conversion factor

$$\text{Printer A: } K_{vA} = 1/(N2 \times MinSS_{vA}) = 144/720 = 1/5$$

and

$$\text{Printer B: } K_{vB} = 1/(N2 \times MinSS_{vB}) = 240/720 = 1/3$$

where indices A and B refer to printer A and printer B, respectively.

The line spacing is then calculated in accordance with equation (2b) to

$$n \times K_{vA} \times MinSS_{vA} = 144/(5 \times 144) = 1/5 \text{ inch, for printer A}$$

and

$$n \times K_{vB} \times MinSS_{vB} = 144/(3 \times 240) = 1/5 \text{ inch, for printer B.}$$

As a result, the line spacing of both printers A and B becomes 1/5 inch. It should be noted here that ($n \times K_{vA}$) and ($n \times K_{vB}$) express the drive pulse count of the respective stepping motors for the line feed operation. Because the line spacing is thus calculated using the $ModSS_v$, differences in the printer mechanisms do not affect the result of executing the line feed setting command "*ESC 3 n*".

As has been explained above, a specific control command, a DIP switch setting etc. is used for setting ModSSs and based on the thus set ModSSs conversion factors are calculated each time a control command is received which instructs a horizontal or vertical relative motion in units of a minimum step size. The command parameter value is then multiplied by the corresponding conversion factor, thereby adapting the command parameter value to the particular printer.

Instead of storing the ModSS setting command parameter values n1 and n2 as variables N1 and N2 it is also possible to directly calculate the conversion factors $K_h$, $K_v$ from the parameter values n1 and n2 and to store the conversion factors instead of the variables N1 and N2. In this alternative, conversion factors $K_h$ and $K_v$ for the horizontal motion and the vertical motion, respectively, are initialized to 1 by the printer. When an ModSS setting command is received it is checked whether the parameter values n1 and n2 are valid or not. If at least one of them is valid, the corresponding conversion factor is calculated in accordance with equation (1a) or (2a) and the result stored. If subsequently a control command such as the line spacing command is received, the line spacing is calculated from the stored conversion factor and the command parameter value in accordance with equation (1b) or (2b). While this alternative requires a calculation according to equation (1a) and/or (2a) only once in response to an ModSS setting command, the first mentioned alternative is preferable because it may reduce calculation errors resulting from rounding.

In the embodiments explained above, the conversion factor is calculated first (step 201) and then (step 202) the number of steps the minimum step size is calculated. However, the sequence of the calculation steps is not critical to the present invention. Thus, it is also possible to first calculate the real amount of relative motion by multiplying the modified step size ModSS by the command parameter value $n$ (i.e. n/N1,2) and then to calculate the number of steps of the minimum step size by dividing the real amount of relative motion by MinSS.

After setting the ModSSs in step 101 or resetting them in step 103, the printer control commands are executed in step 104. The motion commands among the control commands are specifically the commands that are associated with the paper feed and the carriage travel, such as

Set right-side character spacing (ESC SP)
Set absolute print position (ESC $)
Set line spacing (ESC 3)
Print and feed paper (ESC J)
Print and reverse feed (ESC K)
Set printing area in page mode (ESC W)
Set relative print position (ESC \)
Set absolute vertical print position in page mode (GS $)
Set left margin (GS L)
Set printing area width (GS W)
Set relative vertical print position in page mode (GS \)
Set left- and right-side Kanji character spacing (FS S)

These commands are related to the paper feed mechanism and the setting of the character print starting position, and differences in the MinSSs of the printer mechanism have conventionally made it necessary to adjust the parameters of each command. By implementing the two routines of the printer control method of the present invention, however, it is possible to control the printer without changing the individual parameters of these commands, once the one or more ModSSs have been set.

More specifically, dependence on the printer mechanism is limited to the minimal processing required to set the ModSSs, and once this has been done all other feed settings can be accomplished in inches or other standard unit of measure.

When modifying application software developed for different printers, it is also not necessary to modify other printer commands if the program is modified to execute the ModSS setting command of the present invention during printer initialization. It is to be noted, however, that for taking profit of the present invention, it is not always necessary to modify application software. It is not necessary where the ModSSs can be set at the printer itself (by means of DIP switch settings for instance). It also not necessary where a simple additional program is used in the host device to set the ModSSs in the printer before any other application software is invoked.

It is therefore possible by means of the control method thus described to virtually standardize for application software the various minimum step sizes of different printer mechanisms so that users can develop device drivers and application software using common commands and inches or other standard units of measure.

**Claims**

**1.** A printer having

command receiving means (20, 21) for receiving control commands from a host device,
a print head (11) for printing on a recording medium (13),

displacement means (10, 14-17) comprising a recording medium transport means (10, 14) for feeding the recording medium (13) in a first direction relative to print head (11) in steps of a predetermined first minimum step size, and a print head transport means (15-17) for transporting the print head (11) in a second direction relative to said recording medium (13), the second direction intersecting said first direction,

motion amount setting means (21, 25, 26) responsive to said command receiving means for setting a first amount of relative motion by said recording medium transport means (10, 14), said first amount of relative motion being expressed in units of a first modified step size,

calculation means (21) for calculating the number of steps of said first minimum step size corresponding to said set first amount of relative motion from said first minimum step size, said first modified step size and said set first amount of relative motion, and

control means (21, 23, 25, 26, 28) responsive to said motion amount setting means and to said calculation means for causing said recording medium transport means (10, 14) to perform said relative motion by said number of steps of said first minimum step size calculated by said calculation means,

**characterized in that**

said print head transport means (15-17) is adapted to transport the print head (11) in steps of a predetermined second minimum step size,

said motion amount setting means (21, 25, 26) is responsive to said command receiving means for also setting a second amount of relative motion by said print head transport means (15-17), said second amount of relative motion being expressed in units of a second modified step size,

said calculation means (21) is adapted to also calculate the number of steps of said second minimum step size corresponding to said set second amount of relative motion from said second minimum step size, said second modified step size and said set second amount of relative motion for causing said print head transport means (15-17) to perform said relative motion by said number of steps of said second minimum step size calculated by said calculation means, and

the printer further comprises storing means (25, 26) for receiving and storing both said first modified step size and said second modified step size in response to a specific command received by said command receiving means (20, 21 ) from said host device.

2. The printer according to claim 1 wherein said motion amount setting means and said storing means are implemented by a software controlled micro-computer (20, 21, 22, 23, 25, 26).

3. The printer according to any one of the preceding claims wherein the motion amount setting means is adapted to set at least one of the line spacing, the character spacing, and the character position.

4. A method of controlling the printer defined in any one of the preceding claims, comprising the steps of
detecting a first control command for setting a first and a second modified step size,
setting the modified step sizes in response to the detected first control command,
detecting each of second control commands for setting a first amount of relative motion expressed in units of the first modified step size between the print head (11) and the recording medium (13) in a first direction and a second amount of relative motion expressed in units of the second modified step size between the print head (11) and the recording medium (13) in a second direction intersecting said first direction,
calculating, in response to a detected second control command, a first conversion factor from said first minimum step size and the first modified step size and a second conversion factor from said second minimum step size and the second modified step size,
calculating a first modified amount of relative motion by multiplying the first amount of relative motion set by said detected second command with the calculated first conversion factor and a second modified amount of relative motion by multiplying the second amount of relative motion set by said detected second command with the calculated second conversion factor, and
moving the recording medium (13) relative to the print head (11) by a number of steps of said first minimum step size, corresponding to said first modified amount of relative motion, in said first direction and moving the print head (11) relative to the recording medium (13) by a number of steps of said second minimum step size, corresponding to said second modified amount of relative motion, in said second direction.

**Patentansprüche**

1. Drucker mit
einer Befehlsempfangseinrichtung (20, 21), die Steuerbefehle von einer Zentralvorrichtung empfängt,

einem Druckkopf (11) zum Bedrucken eines Aufzeichnungsträgers (13),

einer Verrückungseinrichtung (10, 14-17), die eine Aufzeichnungsträgertransporteinrichtung (10, 14) zum Vorschub des Aufzeichnungsträgers (13) in einer ersten Richtung relativ zu dem Druckkopf (11) in Schritten einer vorherbestimmten ersten Mindestschrittgröße sowie eine Druckkopftransporteinrichtung (15-17) aufweist, welche den Druckkopf (11) in einer zweiten Richtung relativ zu dem Aufzeichnungsträger (13) verfährt, wobei die zweite Richtung die erste Richtung kreuzt,

einer Bewegungsmaßeinstelleinrichtung (21, 25, 26), die unter Ansprechen auf die Befehlsempfangseinrichtung ein erstes Maß an Relativbewegung der Aufzeichnungsträgertransporteinrichtung (10, 14) setzt, wobei das erste Maß an Relativbewegung in Einheiten einer ersten modifizierten Schrittgröße ausgedrückt wird,

einer Recheneinrichtung (21) zum Berechnen der Anzahl Schritte der ersten Mindestschrittgröße entsprechend dem gesetzten ersten Maß an Relativbewegung aus der ersten Mindestschrittgröße, der ersten modifizierten Schrittgröße und dem gesetzten ersten Maß an Relativbewegung, und

einer Steuereinrichtung (21, 23, 25, 26, 28), die unter Ansprechen auf die Bewegungsmaßeinstelleinrichtung und die Recheneinrichtung die Aufzeichnungsträgertransporteinrichtung (10, 14) veranlaßt, die Relativbewegung um die Anzahl von Schritten der ersten Mindestschrittgröße durchzuführen, die von der Recheneinrichtung errechnet wurde,

**dadurch gekennzeichnet, daß**

die Druckkopftransporteinrichtung (15-17) beschaffen ist, den Druckkopf (11) in Schritten einer vorherbestimmten zweiten Mindestschrittgröße zu verfahren,

die Bewegungsmaßeinstelleinrichtung (21, 25, 26) unter Ansprechen auf die Befehlsempfangseinrichtung auch ein zweites Maß an Relativbewegung der Druckkopftransporteinrichtung (15-17) setzt, wobei das zweite Maß an Relativbewegung in Einheiten einer zweiten, modifizierten Schrittgröße ausgedrückt wird,

die Recheneinrichtung (21) beschaffen ist, auch die Anzahl Schritte der zweiten Mindestschrittgröße entsprechend dem gesetzten zweiten Maß an Relativbewegung aus der zweiten Mindestschrittgröße, der zweiten modifizierten Schrittgröße und dem gesetzten zweiten Maß an Relativbewegung zu errechnen, um die Druckkopftransporteinrichtung (15-17) zu veranlassen, die Relativbewegung um die Anzahl Schritte der zweiten Mindestschrittgröße durchzuführen, die von der Recheneinrichtung errechnet wurde, und

der Drucker ferner eine Speichereinrichtung (25, 26) aufweist, die sowohl die erste modifizierte Schrittgröße als auch die zweite modifizierte Schrittgröße in Abhängigkeit von einem durch die Befehlsempfangseinrichtung (20, 21) von der Zentralvorrichtung empfangenen, speziellen Befehl empfängt und speichert.

2. Drucker nach Anspruch 1, bei dem die Bewegungsmaßeinstelleinrichtung und die Speichereinrichtung von einem mittels Software gesteuerten Mikrorechner (20, 21, 22, 23, 25, 26) verwirklicht sind.

3. Drucker nach einem der vorhergehenden Ansprüche, bei dem die Bewegungsmaßeinstelleinrichtung beschaffen ist, mindestens eine der Größen: Zeilenabstand, Zeichenabstand und Zeichenposition zu setzen.

4. Verfahren zum Steuern des Druckers nach einem der vorhergehenden Ansprüche, folgende Schritte aufweisend:

Erfassen eines ersten Steuerbefehls zum Einstellen einer ersten und einer zweiten modifizierten Schrittgröße, Einstellen der modifizierten Schrittgrößen in Abhängigkeit von dem erfaßten ersten Steuerbefehl, Erfassen jedes von zweiten Steuerbefehlen zum Einstellen eines ersten Maßes an Relativbewegung, ausgedrückt in Einheiten der ersten modifizierten Schrittgröße, zwischen dem Druckkopf (11) und dem Aufzeichnungsträger (13) in einer ersten Richtung und eines zweiten Maßes an Relativbewegung, ausgedrückt in Einheiten der zweiten modifizierten Schrittgröße, zwischen dem Druckkopf (11) und dem Aufzeichnungsträger (13) in einer zweiten, die erste Richtung kreuzenden Richtung,

Berechnen eines ersten Umwandlungsfaktors aus der ersten Mindestschrittgröße und der ersten modifizierten Schrittgröße und eines zweiten Umwandlungsfaktors aus der zweiten Mindestschrittgröße und der zweiten modifizierten Schrittgröße in Abhängigkeit von einem erfaßten zweiten Steuerbefehl,

Errechnen eines ersten modifizierten Maßes an Relativbewegung durch Multiplizieren des ersten Maßes an Relativbewegung, welches durch den erfaßten zweiten Befehl gesetzt wurde, mit dem berechneten ersten Umwandlungsfaktor und eines zweiten modifizierten Maßes an Relativbewegung durch Multiplizieren des zweiten Maßes an Relativbewegung, welches durch den erfaßten zweiten Befehl gesetzt wurde, mit dem berechneten zweiten Umwandlungsfaktor und

Bewegen des Aufzeichnungsträgers (13) gegenüber dem Druckkopf (11) um eine Anzahl von Schritten der ersten Mindestschrittgröße entsprechend dem ersten modifizierten Maß an Relativbewegung in der ersten Richtung und Bewegen des Druckkopfes (11) gegenüber dem Aufzeichnungsträger (13) um eine Anzahl von Schritten der zweiten Mindestschrittgröße entsprechend dem zweiten modifizierten Maß an Relativbewegung in der zweiten Richtung.

**Revendications**

1. Imprimante comportant :

   un moyen (20, 21) de réception d'instructions, destiné à recevoir des instructions de contrôle en provenance d'un dispositif hôte,
   une tête (11) d'impression pour imprimer un support (13) d'enregistrement,
   des moyens (10, 14 à 17) de déplacement comprenant un moyen (10, 14) d'entraînement de support d'enregistrement, destiné à faire avancer le support (13) d'enregistrement dans une première direction par rapport à la tête (11) d'impression, par pas d'une première taille de pas minimum, déterminée à l'avance, et un moyen (15 à 17) d'entraînement de tête d'impression, destiné à entraîner la tête (11) d'impression dans une deuxième direction par rapport au support (13) d'enregistrement, la deuxième direction croisant la première direction,
   un moyen (21, 25, 26) de réglage de valeur de déplacement, répondant au moyen de réception d'instructions, en réglant une première valeur de déplacement relatif à l'aide du moyen (10, 14) d'entraînement de support d'enregistrement, la première valeur de déplacement relatif étant exprimée en unités d'une première taille de pas modifiée,
   un moyen (21) de calcul, destiné à calculer le nombre de pas ayant la première taille de pas minimum correspondant à la première valeur réglée de déplacement relatif, à partir de la première taille de pas minimum, de la première taille de pas modifiée et de la première valeur réglée de déplacement relatif, et
   un moyen (21, 23, 25, 26, 28) d'instruction répondant au moyen de réglage de valeur de déplacement et au moyen de calcul, en faisant en sorte que le moyen (10, 14) d'entraînement du support d'enregistrement effectue le déplacement relatif du nombre de pas de la première taille de pas minimum, calculé par le moyen de calcul,

   **caractérisée en ce que** :

   le moyen (15 à 17) d'entraînement de la tête d'impression est conçu pour entraîner la tête (11) d'impression par pas d'une deuxième taille de pas minimum déterminée à l'avance,
   le moyen (21, 25, 26) de réglage de valeur de déplacement répond au moyen de réception d'instructions, en réglant également une deuxième valeur de déplacement relatif à l'aide du moyen (15 à 17) d'entraînement de la tête d'impression, la deuxième valeur de déplacement relatif étant exprimée en unités d'une deuxième taille de pas modifiée,
   le moyen (21) de calcul est conçu pour calculer également le nombre de pas ayant la deuxième taille de pas minimum correspondant à la deuxième valeur réglée de déplacement relatif, à partir de la deuxième valeur de pas minimum, de la deuxième taille de pas modifiée et de la deuxième valeur réglée de déplacement relatif, pour faire en sorte que le moyen (15 à 17) d'entraînement de la tête d'impression effectue le déplacement relatif selon le nombre de pas de la deuxième valeur de pas minimum, calculé par le moyen de calcul, et
   l'imprimante comprend en outre, un moyen (25, 26) de mémorisation, destiné à recevoir et à mémoriser à la fois la première taille de pas modifiée et la deuxième taille de pas modifiée, en réponse à une instruction spécifique reçue par le moyen (20, 21) de réception d'instructions, en provenance du dispositif hôte.

2. Imprimante suivant la revendication 1, dans laquelle le moyen de réglage de valeur de déplacement et le moyen de mémorisation sont mis en oeuvre par un micro-ordinateur (20, 21, 22, 23, 25, 26) régi par logiciel.

3. Imprimante suivant l'une quelconque des revendications précédentes, dans laquelle le moyen de réglage de valeur de déplacement est conçu pour régler au moins l'interlignage ou l'interlettrage ou encore la position des caractères.

4. Procédé pour commander l'imprimante définie dans l'une quelconque des revendications précédentes, comprenant les étapes consistant à :

   détecter une première instruction de contrôle pour régler des première et deuxième tailles de pas modifiées,
   régler les tailles de pas modifiées, en réponse à la première instruction de contrôle détectée,
   détecter à la fois une deuxième instruction de contrôle pour régler une première valeur de déplacement relatif, exprimée en unités de la première taille de pas modifiée, entre la tête (11) d'impression et le support (13) d'enregistrement, dans une première direction, et une deuxième valeur de déplacement relatif, exprimée en unités de la deuxième taille de pas modifiée, entre la tête (11) d'impression et le support (13) d'enregistrement, dans une deuxième direction croisant la première direction,

calculer, en réponse à une deuxième instruction de contrôle détectée, un premier facteur de conversion, à partir de la première taille de pas minimum et de la première taille de pas modifiée, ainsi qu'un deuxième facteur de conversion, à partir de la deuxième taille de pas minimum et de la deuxième taille de pas modifiée,

calculer une première valeur modifiée de déplacement relatif, en multipliant la première valeur de déplacement relatif, réglée par la deuxième instruction détectée, par le premier facteur de conversion calculé et une deuxième valeur modifiée de déplacement relatif, en multipliant la deuxième valeur de déplacement relatif, réglée par la deuxième instruction détectée, par le deuxième facteur de conversion calculé, et

déplacer le support (13) d'enregistrement par rapport à la tête (11) d'impression, d'un nombre de pas de la première taille de pas minimum correspondant à la première valeur modifiée de déplacement relatif, dans la première direction et déplacer la tête (11) d'impression par rapport au support (13) d'enregistrement, d'un nombre de pas de la deuxième taille de pas minimum, correspondant à la deuxième valeur modifiée de déplacement relatif, dans la deuxième direction.

# FIG. 1

FIG. 2

FIG. 3a

Executing motion command

Calculating conversion factors
$$K_h = 1 / ( N1 \times MinSS_h)$$
$$K_v = 1 / ( N2 \times MinSS_v)$$

201

Calculating
the amount of relative motion
$$n \times K_h \times MinSS_h$$
$$n \times K_v \times MinSS_v$$

202

Continue processing

# FIG. 3b